# EUROPEAN PATENT APPLICATION

(11) **EP 2 759 696 A2**
(43) Date of publication of application: **30.07.2014**
(21) Application number: 12827262.2
(22) Date of filing: 21.08.2012
(51) Int. Cl.: F03B 13/10, F03B 17/02, F03B 17/06, F03B 3/12

(54) **POWER GENERATION APPARATUS INCLUDING A FLOATING BODY, SHIP PROPELLING APPARATUS, AND FOLDABLE AND WINDABLE WING INCLUDED IN THE POWER GENERATION APPARATUS**

(30) Priority: 31.08.2011 KR 20110087718; 09.12.2011 KR 20110131797; 26.07.2012 KR 20120081560; 14.08.2012 KR 20120088822; 16.08.2012 KR 20120089218
(71) Applicant: Lee, Seong-woo, Chuncheon-si, Gangwon-do 200-030 (KR)
(72) Inventor: Lee, Seong-woo, Chuncheon-si, Gangwon-do 200-030 (KR)
(74) Representative: Chaillot, Geneviève
(86) International application number: PCT/KR2012/006623
(87) International publication number: WO 2013/032161

(57) **Abstract**

The present invention relates to various types of power generation apparatuses and ship propelling apparatuses including a buoyancy body as well as wing portions provided thereto, which include wing frames with a multistage, lattice web structure and foldable and rollable wings which are connected to the wing frames, wherein the power generation apparatus includes a submersible buoyancy body which has one closed end and the other open end as well as a buoyancy space formed therein, a rotary body which is rotatably connected inside the submersible buoyancy body and has the first wing portion mounted on the other end thereof, and a power generation means which is disposed between the submersible buoyancy body and the rotary body to generate electricity.

## Description

### Technical Field

The present invention relates to a power generation apparatus and a ship propelling apparatus including a buoyancy body as well as foldable and rollable wings provided thereto, especially to a power generation apparatus which includes a buoyancy body and generates electricity using a horizontal flow force of a liquid or a gas and a ship propelling apparatus which propels a ship, as well as foldable and rollable wings, which are connected to a wing frame with a multistage, lattice web structure, provided thereto.

### Background Art

As fossil fuels have been excessively used, environmental pollution gradually becomes worse, and consequently more attention has been drawn to eco-friendly energy today. Especially, because fossil fuel prices have been skyrocketing recently, many researches have been developed that use solar, wind, or tidal power to generate electricity. The key point in generating eco-friendly energy by using natural power is to enlarge a power generation unit to improve generation efficiency.

Considering the key point, solar power generation has disadvantages that require an excessive installation space and have extremely low power generation efficiency until now. And wind power generation also has disadvantages that require a large installation space, have a difficulty in enlargement, and have to consider natural environment conditions excessively.

In addition, tidal current power generation using the flow of a tide has a limit to enlargement, because a tidal current power generation apparatus is required to be installed in an area having a fast current, and although having an advantage that is enlarged easier than wind power and tidal current power generation, tidal power generation that uses potential energy of sea level caused by a tidal phenomenon to generate electricity also has other disadvantages that spend a large amount of costs to build a huge sea wall and causes environmental destruction.

Besides, a conventional propeller-type ship propelling apparatus uses helical pitch blades, and pushes a liquid along the surfaces of the blades in a screw motion, so that propulsion is obtained through a reaction of the pushed liquid. The propelling apparatus is typically made out of metals, thereby becoming heavy, and therefore has disadvantages that consume a large amount of energy when being driven as well as have a difficulty in using max performance because of a cavitation phenomenon.

Consequently, if a wing would be provided that allow a vertical plane thereof to completely receive the horizontal flow pressure of a horizontally-flowing liquid or gas so as to efficiently convert the received pressure into a rotational force and is mounted on a light and durable power generation apparatus which may be easily enlarged, power generation efficiency may be more improved. In addition, if a wing would be provided that rotates a power generation apparatus at a regular speed regardless of a tidal or wind velocity, electricity may be stably generated and also the wing may be used for a high efficiency power generation apparatus as well as a propelling apparatus of a ship.

### Disclosure

### Technical Problem

An objective of the present invention is applied to solve the above-mentioned defects, to implement a power generation apparatus in three types: moored, fixed, and floating so that the power generation apparatus is eco-friendly and may generate more electricity efficiently because being easily enlarged, to provide a power generation apparatus and a ship propelling apparatus including a buoyancy body which is implemented in two manners: an unidirectional rotation type wherein a single wing portion is mounted on the power generation apparatus and electricity is generated by the rotation of the single wing portion; and a reverse directional rotation type wherein two wing portions are mounted on the power generation apparatus and electricity is generated by the two wings rotated in the opposite direction to each other, and also to provide a ship propelling apparatus. Another objective of the present invention is to provide foldable and rollable wings, and also scroll type wings that allow the power generation apparatus to be rotated at a regular speed even though a tidal or wind speed is changed.

### Technical Solution

The objectives are achieved by the present invention including a submersible buoyancy body which has one closed end as well as the other open end and has a buoyancy space formed inside, a rotary body which is rotatably connected to the submersible buoyancy body and has the first wing portion provided on the other end of the rotary body, and a power generation means which is disposed between the submersible buoyancy body and the rotary body to generate electricity.

A ship propelling apparatus including a buoyancy body and an additional power generation apparatus according to the present invention may be configured to include a ship floating on the water surface, a rotary body which has one end rotatably connected to the ship and the other end provided with a wing portion, a rotational force generator provided to the one end of the ship, a rotational force transmitter which is connected to transmit a rotational force from the rotational force generator to the rotary body, and a power generation means which is disposed between the ship and the rotary body to generate electricity.

According to the present invention, a wing portion includes multiple wing frames which have multistage, lattice web structures, and multiple wings which have each one edge connected to one side of the wing frame, wherein the multiple wings adhere to surfaces of the wing frames and transmit a flow pressure of a liquid or a gas to the wing frames so as to allow the wing frames to be rotated when the wings connected to the wing frames are positioned in a direction facing a horizontal flow of the liquid or the gas, whereas the wings are spaced from the wing frames and prevent a flow pressure of a liquid or a gas from being transmitted to the wing frames when the wings connected to the wing frames are positioned along a direction of a horizontal flow of the liquid or the gas.

### Advantageous Effects

A power generation apparatus including a buoyancy body according to the present invention is installed on or below the water surface using buoyancy, thereby having an advantage that may be easily implemented as an enlarged high efficiency power generation apparatus. In addition, the power generation apparatus has other advantages that may be easily mounted, reduce installation costs significantly, and is eco-friendly because a large scale of construction or infrastructure is not required. Furthermore, the apparatus has another advantage that easily performs the maintenance because the apparatus may be pulled above the water surface using buoyancy in need of repair.

Furthermore, a power generation apparatus including a buoyancy body according to the present invention may be operated below the water surface, thereby stably generating electricity without affecting the passage of a ships or regardless of weather changes, and greatly reduce operational resistance in comparison with a wind power generation apparatus operating under air pressure, thereby efficiently generating electricity in an area with a slow water flow velocity.

Furthermore, a power generation apparatus including a buoyancy body according to the present invention has scroll type wings to cope actively with the change of a water flow or wind velocity, thereby having an advantage that may be rotated at a regular speed, and allows a submersible buoyancy body and a rotary body to be rotated in the opposite direction to each other, thereby having another advantage that may efficiently generate electricity in an area with a slow flow velocity.

Besides, a ship propelling apparatus including a buoyancy body according to the present invention is light and consumes a small amount of energy, thereby being economical, has a durable structure, thereby being easily enlarged, is free from a cavitation phenomenon while in operation and may be easily mounted on a single ship in multiple number, thereby increasing a propulsion velocity of the ship.

### Description of Drawings

FIG. 1 illustrates a power generation apparatus including a buoyancy body according to a first embodiment of the present invention.
FIG. 2 illustrates a power generation apparatus including a buoyancy body according to a second embodiment of the present invention.
FIG. 3 illustrates an exemplary wing portion including multiple wing frames.
FIG. 4 illustrates a state in which foldable and rollable wings are pivotably connected to a wing frame according to the present invention in a schematic view.
FIG. 5 illustrates an operation principle of the wings shown in FIG. 4.
FIG. 6 illustrates a configuration of a scroll type wing according to the present invention.
FIG. 7 illustrates another type of a wing frame.
FIG. 8 illustrates a power generation apparatus including a buoyancy body according to a third embodiment of the present invention.
FIG. 9 illustrates a power generation apparatus including a buoyancy body according to a fourth embodiment of the present invention.
FIG. 10 illustrates a power generation apparatus including a buoyancy body according to a fifth embodiment of the present invention.
FIG. 11 illustrates a power generation apparatus including a buoyancy body according to a sixth embodiment of the present invention.
FIG. 12 illustrates a power generation apparatus including a buoyancy body according to a seventh embodiment of the present invention.
FIG. 13 illustrates another configuration of the power generation apparatus including a buoyancy body according to the seventh embodiment of the present invention.
FIG. 14 illustrates a further configuration of the power generation apparatus including a buoyancy body according to the seventh embodiment of the present invention.
FIG. 15 illustrates a power generation apparatus including a buoyancy body according to an eighth embodiment of the present invention.
FIG. 16 illustrates a power generation apparatus including a buoyancy body according to a ninth embodiment of the present invention.
FIG. 17 illustrates a case in which a ship propelling apparatus, which include wing portions operated on the basis of the operation principle shown in FIG. 5, is applied to a catamaran in a schematic view.
FIG. 18 illustrates a configuration of a catamaran that has the ship propelling apparatus including a buoyancy body according to the present invention in a schematic side view.
FIG. 19 illustrates a configuration of a case in which an additional power generation apparatus is provided to the ship propelling apparatus including a buoyancy body according to the present invention in a schematic view.

### Mode for Invention

Hereinafter, preferred embodiments of the present invention are described in detail with reference to the accompanying drawings.

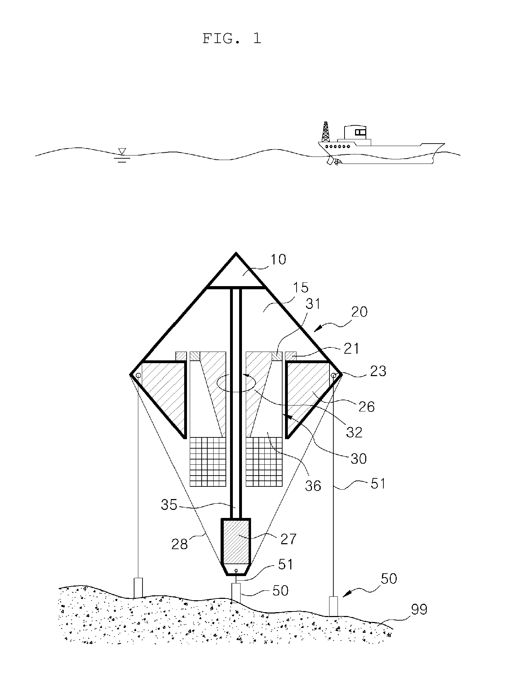

FIG. 1 illustrates a power generation apparatus including a buoyancy body according to a first embodiment of the present invention. Referring to FIG. 1, a power generation apparatus according to a first embodiment of the present invention may include a submersible buoyancy body 20, a rotary body 30, a power generation means, the first wing portion 40, and a mooring means, and be implemented in such a manner that the power generation apparatus is moored at the sea floor 99 through the mooring means after completely submerged below the sea level (hereinafter, "moored power generation apparatus").

The submersible buoyancy body 20 has one closed end (the upper portion of the body shown in FIG. 1) as well as the other open end (the lower portion of the body shown in FIG. 1) and the first buoyancy space 15 inside. As described above, the submersible buoyancy body has one closed end as well as the other open end and a buoyancy space inside, and thus the moored power generation apparatus has buoyancy in the water because of air remaining in the buoyancy space. Here, the first buoyancy space 15 of the submersible buoyancy body 20 may be configured with one space, or include an additional sealed the second buoyancy space 10 having buoyancy generated through a gas, as shown in FIG. 1. And also, multiple sealed buoyancy spaces may be provided to the exterior and interior of the submersible buoyancy body 20, if required. Besides, although the second buoyancy space 10 is preferably provided inside the upper portion of the submersible buoyancy body 20 as shown in FIG. 1, the present invention is not limited thereto, and the second buoyancy space may be provided in a variety of positions and shapes without disturbing a rotary body 30 and a buoyancy body extension shaft 35 to be described below.

Besides, the volume of the air remaining in the first buoyancy space 15 may be decreased due to a water pressure transmitted through an opening when the space submerges deeply into the water, and therefore an air supplement means is additionally required that replenishes the decreased volume of the air, or a rotary body 30 to be described below and an end of the opening of the submersible buoyancy body 20 are rotatably connected to each other and sealed by a sealing means in a waterproof manner. The completely-sealed second buoyancy space 10 may be filled with air, or a gas that is lighter than air such as helium or a solid matter that is lighter than water such as styrofoam or urethane form.

Besides, the submersible buoyancy body 20 performs a kind of a housing function, and is formed in such a manner that the width thereof becomes narrower toward one end and the body is closed at the one end, while the width thereof becomes narrower toward the other end in a determined length and the body is open at the center of the other end. And the submersible buoyancy body has the wide central portion and becomes narrower toward the both ends, and therefore may be formed in a streamlined shape that minimizes a flow resistance of the seawater. Although the submersible buoyancy body 20 preferably has one end formed in a conical or hemispherical shape, the present invention is not limited thereto, and the one end may be formed in a polygonal shape when necessary. Furthermore, the opening on the other end of the submersible buoyancy body 20 may be formed in a circular shape, and is extended to the center of the submersible buoyancy body 20, thereby having a cylindrical shape on the whole. Accordingly, a rotary body 30 to be described below may be inserted into and rotatably connected to the opening on the other end of the submersible buoyancy body.

A buoyancy body extension shaft 35 may be provided inside the submersible buoyancy body 20. The buoyancy body extension shaft 35 is extended in the center of the submersible buoyancy body 20 in a longitudinal direction. Here, when the second buoyancy space 10 is provided inside the upper portion of the submersible buoyancy body 20, an end of the above-mentioned buoyancy body extension shaft 35 may be connected to the lower portion of the second buoyancy space 10.

The rotary body 30 may include buoyancy bodies 32 and 36. Although, for convenience of description, the rotary body 30 including the buoyancy bodies 32 and 36 is configured with the third ballast tank 32 and the third buoyancy space 36, the rotary body may be configured in such a manner that the bodies are used as one ballast tank and the rest space that is not filled with water of the ballast tank is used as the third buoyancy space 36, that is, only the one ballast tank may be used as a buoyancy body. And also, the third ballast tank 32 may not have multiple compartments in order to allow the center of gravity to be moved downwardly when the rotary body 30 is rotated, and is preferably formed in a reverse conical shape, as shown in FIG. 1. However, for convenience of manufacture, the tank may be formed in a reverse polygonal shape.

The rotary body 30 may be inserted into and rotatably connected to the submersible buoyancy body 20 via the opening on the other end of the submersible buoyancy body 20. The rotary body 30 may have the central portion rotatably connected to the above-mentioned buoyancy body extension shaft 35, and the first wing portion 40 mounted on the other end thereof in such a manner that the wing portion is exposed to the water. Here, although not shown in FIG. 1, the first wing portion 40 and the third buoyancy space 36 are spaced from each other in a determined distance if required, and an end of the opening on the other end of the submersible buoyancy body 20 is positioned at a space that is formed between the first wing portion 40 and the third buoyancy space 36 in an inwardly-extended manner, so that only the first wing portion may be exposed to the sea water, and the third buoyancy space 36 as well as a part of the rotary body 30 may be received in the submersible buoyancy body 20 in a sealed manner. That is, the end of the opening on the other end of the submersible buoyancy body 20 is inwardly extended, and therefore an inner circumference (circumferential length) of the opening is reduced and an outer circumference (circumferential length) of the rotary body 30 that is positioned to face the opening may be also reduced along with the reduced inner circumference of the opening. As described above, the rotary body 30 positioned perpendicularly to a flow direction of the sea water rotates around the buoyancy body extension shaft 35 in the submersible buoyancy body 20 in a state in which the rotary body is completely submerged in the sea water. Besides, although FIG. 1 is shown in such a manner that there is not provided a space between the buoyancy body extension shaft 35 and the rotary body 30 because the shaft and the body are rotatably connected to each other using a rotation means such as a bearing, for convenience of illustration, the space in which the rotation means is positioned is illustrated as empty in FIG. 1, and therefore the shaft and the body are emphatically distinguished from each other. And also, although the rotary body 30 and the end of the opening of the submersible buoyancy body 20 are rotatably connected to each other using the rotation means and a space between the rotary body and the opening may be watertightly sealed by a sealing means, the space is also illustrated as empty.

The power generation means is provided between the above-described submersible buoyancy body 20 and the rotary body 30 and generates electricity using a rotational motion of the rotary body 30 and/or the submersible buoyancy body 20. The power generation means may be configured to include a stator 21 and a rotor 31. As shown in FIG. 1, the rotor 31 is provided to the exterior of the rotary body 30, and the stator is provided to the interior of the submersible buoyancy body 20 in such a manner that the stator is disposed in a position corresponding to the rotor 31. Although the power generation means with such a configuration is provided according to one example of the present invention, the present invention is not limited thereto, and various know types and configurations may be used for the power generation apparatus. In addition, it is apparent that the stator 21 and the rotor 31 may be disposed in various positions of the submersible buoyancy body 20 and the rotary body 30, respectively, if electricity is be generated by an interaction between the stator and the rotor in a position in which the stator and the rotor are arranged to correspond to each other.

The first wing portion 40 is mounted on the other end (the lower portion of the submersible buoyancy body in FIG. 1) of the rotary body 30, and is rotated by a horizontal flow force of the sea water in combination with the rotary body 30. Here, a configuration in which the first wing portion 40 rotates the rotary body 30 in a constant direction regardless of the direction of a horizontal flow force of the sea water is described in detail below.

The mooring means allows the submersible buoyancy body 20, the rotary body 30, and the first wing portion 40 to submerge below the sea surface and be moored. That is, the mooring means is made with a weight that generates a force in a downward direction of the sea surface because of gravity, that is, generates a force in the opposite direction to a force acting toward the sea surface due to buoyancy generated by the above-mentioned first and second buoyancy spaces 15 and 10, thereby fixing the moored power generation apparatus according to the present invention in the water so as to prevent the apparatus from flowing along the seawater and so as to allow the power generation apparatus according to the present invention to maintain a vertical position in the water.

The mooring means may include wires for the mooring means 51 which are connected to multiple points of the submersible buoyancy body 20, respectively and a sea floor mooring portion 50. Accordingly, the mooring means controls the balance of the moored power generation apparatus vertically and horizontally to keep the horizontality of the apparatus and allow the moored power generation apparatus to be stably fixed in response to slopes or curves of the sea floor 99.

Each of the wires for the mooring means 51 has one end connected to each multiple points of the submersible buoyancy body 20, respectively and includes the sea floor mooring portion 50 on the other end thereof. Here, a wire adjustment means 23 is provided at a position where the one end of the each wire for the mooring means 51 is connected to the submersible buoyancy body 20 so that the length of the each wire for the mooring means 51 is adjusted, and therefore the balance of the power generation apparatus may be kept regardless of topographical changes of the sea floor 99. The wire adjustment means 23 may include a crane for winding each of the wires for the mooring means 51. In addition, the sea floor mooring portion 50 may be configured with an anchor, and a ballast tank may be mounted on the sea floor mooring portion 50 if required. Furthermore, the spot on which the crane is mounted is preferably formed with a watertight space having an open bottom, so that marine pollution is minimized.

The first ballast tank 26 performs a submergence function, and may be provided toward the other end from the center of the submersible buoyancy body 20, and preferably, mounted on the outer circumference of the other open end of the submersible buoyancy body 20. Here, the first ballast tank 26 may have multiple compartments to allow the submersible buoyancy body 20 to easily keep horizontality.

The second ballast tank 27 may be mounted on the other end of the buoyancy body extension shaft 35, perform a submergence function as well as keep the horizontality of the submersible buoyancy body 20, and maintain the center of gravity in the lower portion of the submersible buoyancy body 20 to allow the submersible buoyancy body 20 to be stably fixed. Here, the submersible buoyancy body 20 and the second ballast tank 27 are preferably fixed by the multiple buoyancy body support means 28, and also, the buoyancy body support means 28 may use a wire, etc. and reinforce insufficient durability caused by a load generated because the buoyancy body extension shaft 35 is connected to the only upper portion of the submersible buoyancy body 20. Additional mooring means 50 and 51 may be provided to the lower portion of the second ballast tank 27 in order to fix the buoyancy body extension shaft 35 more stably.

The third ballast tank 32 mounted on the rotary body 30 may be used to arrange the above-mentioned rotor 31 and the stator 21 in the same height. When the volume of the air remaining in the first buoyancy space 15 is decreased due to water pressure increased along the depth of submergence, the height of the rotor 31 is changed, and after that, a position detection sensor (not shown) senses the change and controls the third ballast tank 32, so that the rotor 31 and the stator 21 are equal in height.

The moored power generation apparatus may be used as a movable power generation apparatus which is connected to a ship through a tow means instead of being moored to the sea floor and uses a propulsion velocity of the ship to generate electricity in a towed state. In this case, the mooring means 50 and 51 may be removed.

In addition, an additional rescue means which crews of the ship safely reach may be mounted on an outer surface of the one end of the submersible buoyancy body 20. The rescue means allows the power generation apparatus to emerge above the water surface in order to save passengers or crews in emergency of the ship, and may include steps, handrails and handles. Alternatively, the rescue means may be configured in such a manner that a tightly-sealed exit is provided to the submersible buoyancy body 20 to allow passengers or crews to enter the power generation apparatus.

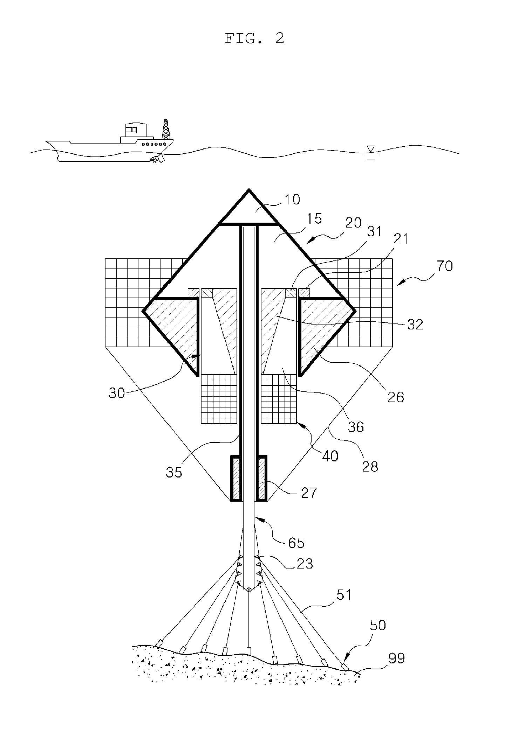

FIG. 2 illustrates a power generation apparatus including a buoyancy body according to a second embodiment of the present invention. Referring to FIG. 2, the power generation apparatus according to the second embodiment of the present invention may include a submersible buoyancy body 20, a rotary body 30, a power generation means, the first wing portion 40, the second wing portion 70, and a sea floor mooring shaft 65 having a mooring means.

The second wing portion 70 may be mounted on the outer circumference of the one end of the submersible buoyancy body 20, and have multiple wing frames 41 provided thereto in a radial manner.

The buoyancy body extension shaft 35 is provided inside the submersible buoyancy body 20 in a vertical direction. Here, the buoyancy body extension shaft 35 is formed in a cylindrical shape with a hollow space inside, and has one end inwardly connected to the upper portion of the submersible buoyancy body 20 and the other end open. Accordingly, the sea floor mooring shaft 65 may be inserted into and rotatably connected to the opening of the other end of the buoyancy body extension shaft 35. The other end of the sea floor mooring shaft 65 is moored to the sea floor 99 through mooring means 50 and 51, and a wire adjustment means 23 may be provided to a portion in which wires for the mooring means 51 and the sea floor mooring shaft 65 are connected to each other. The sea floor mooring shaft 65 may include one or more ballast tank(s), and be used as a support shaft for the rotation of the submersible buoyancy body 20.

In addition, according to another embodiment, there is provided a sea floor fixing shaft (not shown) that is provided toward the sea floor 99 in a vertical direction instead of the sea floor mooring shaft 65, and inserted into and fixed to the sea floor 99 in order to be used as a support shaft for the rotation of the submersible buoyancy body 20.

Other undescribed components in the power generation apparatus according to the second embodiment of the present invention have the same configuration as that according to the above-mentioned first embodiment, and therefore repeated descriptions of the components are omitted. Here, like reference numerals in FIG. 2 designate like elements in FIG. 1. In addition, repeated descriptions in various embodiments of the present invention to be described below are omitted.

According to the second embodiment of the present invention, the power generation apparatus with such a configuration generates electricity in such a manner that the first wing portion 30 mounted on the rotary body 30 and the second wing portion 70 mounted on the submersible buoyancy body 20 are rotated in the opposite direction to each other. Configurations of the wing portions 40 and 70 that may be mounted on the power generation apparatus according to the present invention as well as the principle that the wing portions 40 and 70 are rotated in the opposite direction to each other are described below.

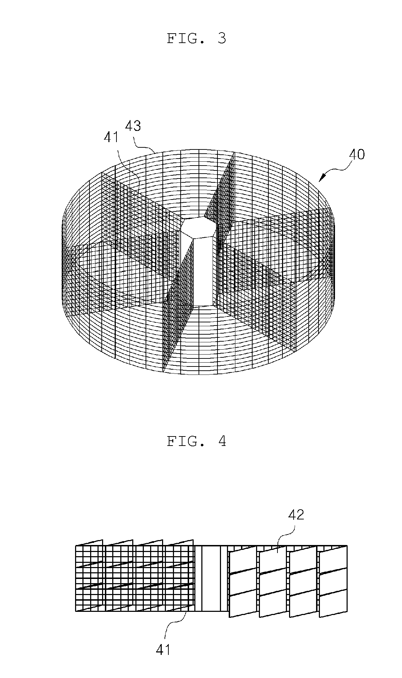

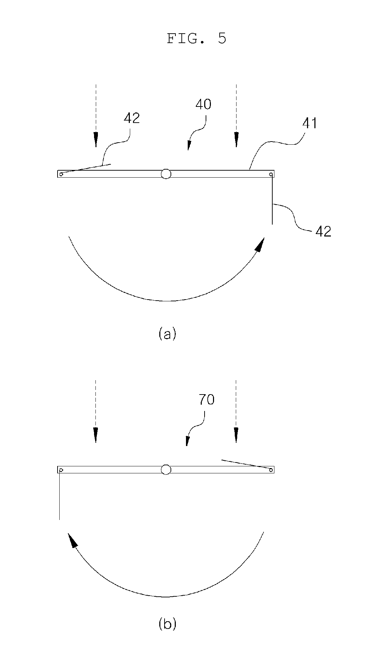

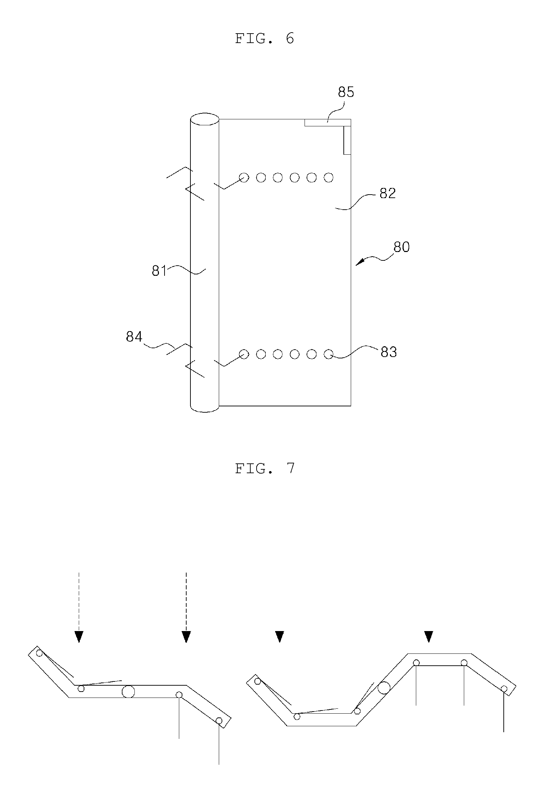

FIG. 3 illustrates an exemplary wing portion including multiple wing frames, FIG. 4 illustrates a state in which foldable and rollable wings are pivotably connected to a wing frame according to the present invention in a schematic view, Fig. 5 illustrates an operation principle of the wings shown in FIG. 4, FIG. 6 illustrates a configuration of a scroll type wing according to the present invention, and FIG. 7 illustrates another type of a wing frame.

Referring to FIGs. 3 and 4, the wing portions 40 and 70 according to the present invention include multiple wing frames 41 which have a multistage, lattice web structure and multiple foldable and rollable wings 42 which are connected to the wing frames.

Referring to FIGs. 4 and 5, the foldable and rollable wings 42 according to the present invention is configured in such a manner that an only edge on one end of the wing is pivotably connected to one end of the wing frame 41 with a lattice web structure and edges on the other ends of the wing are spaced from the wing frame 41. Referring to FIG. 5a, when a liquid or a gas horizontally flows in one direction, the wings 42 on the right side of the wing frame 41 (applied according to a visual direction of a viewer, hereinafter same as above), that is, the wings 42 positioned along a direction of a horizontal flow of the liquid or the gas do not disturb a flow of the liquid or the gas because a horizontal flow pressure of the liquid or the gas that passes through multiple lattice holes formed on the wing frame 41 with a lattice web structure is transmitted to the wings 42 and therefore the wings 42 are spaced from a surface of the wing frame 41 with a multistage, lattice web structure.

On the contrary to this, the wings 42 on the left side of the wing frame 41, that is, the wings 42 positioned in a direction facing a horizontal flow of a liquid or a gas receive a horizontal flow pressure of the liquid or the gas, and then adhere to the surface of the lattice web structure, and therefore the received pressure is transmitted to the left side of the wing frame 41 and rotates the wing frame 41. As a result, the wing frame in FIG. 5a is rotated in a constant direction (counterclockwise) regardless of a horizontal flow direction of the sea water or wind.

Whereas, as shown in FIG. 5b, the wings 42 are mounted in the opposite manner to FIG. 5a, and therefore the wing frame 41 in FIG. 5b is always rotated in the opposite direction to the wing frame 41 in FIG. 5a. Accordingly, when the first wing portion 40 is mounted on the other end of the above-mentioned rotary body 30, as shown in FIG. 5a, and the second wing portion 70 is mounted on the outer circumference of the submersible buoyancy body 20, as shown in FIG. 5b, the rotary body 30 and the submersible buoyancy body 20 are always rotated in the opposite direction to each other, and therefore electricity may be generated more efficiently.

Referring to FIG. 3, a foreign matter prevention membrane 43 with a multistage, lattice web structure may be additionally mounted on the outer circumference of the first wing portion 40. A space between lattices of the foreign matter prevention membrane 43 may be denser than another space between that of the wing frame 41. Accordingly, the wing portion with multiple lattices may become lightweight and be advantageously enlarged in comparison with an existing wing portion. In addition, a foreign matter adhesion prevention means for continuously spraying air or water to prevent foreign matters from adhering to the membrane and the frame (not shown) may be additionally mounted on surfaces of the foreign matter prevention membrane 43 and the wing frame 41. Furthermore, the wing frame is preferably made in a prefabricated manner for convenience of manufacture, maintenance, and repair.

Besides, prior arts including a wing operated using an operation principle that is similar to that of the foldable and rollable wing according to the present invention are described as follows: Korean Patent publication number 1020110069751, entitled "Tidal Current Power Plant"; and another Korean Patent publication number 1020100039939, entitled "A Hydroelectric Plant".

The wing according to the present invention is made out of a waterproof material that is foldable and rollable as well as stands uprightly, that is, a lightweight and soft fabric, unlike that the wing according to the prior arts includes a flat panel made out of a metal or plastic material (a rotation panel or a water flow prevention panel). Accordingly, the wing according to the present invention is more durable and lighter than the flat panel wing, thereby being easily enlarged. In addition, the prior arts have disadvantages that a hinge is used to connect the wing with the frame, thereby having a mechanical drawback relating durability, and shellfish or foreign matters adhere to the flat panel wing when being mounted in the water, so that the flat panel wing has a difficulty in being normally operated. Especially, when the flat panel wings are used for a wind power generation plant, an operational problem may be caused because the flat panel wing may rattle in a strong wind. However, the wing according to the present invention may be operated more softly, because multiple hinges are not used to connect the wing with the frame and one edge of the wing made out of a soft and light material such as a fabric directly adhere to each one end of multiple wing frames with a multistage, lattice web structure.

Besides, the foldable and rollable wing according to the present invention may be made out of a waterproof material that is foldable and rollable as well as stands upright, and an upright state reinforcement means 85, such as such as a helium gas sack, may be provided on the other end of the wing 42 to prevent the wing 42 from leaning downwardly (refer to FIG. 6). Alternatively, there may be provided another upright standing reinforcement means that attaches solid iron pins along edges of the wing 42. In addition, an edge on an upper end of the wing 42 may be connected to an upper end of the wing frame 41 with a lattice web structure to pivot upwards and downwards rather than the wing is connected to pivot from side to side as shown in FIG. 5. In this case, an upright state reinforcement means may be provided to be used as a proper heavy weight, such as an iron pin attached to a lower portion of the wing 42 so that the wing 42 lifted upwards due to a horizontal flow pressure of a liquid or a gas falls downwards and stands upright.

Besides, the foldable and rollable wing 42 according to the present invention may be provided in two types: a fixed wing of which one edge is attached and fixed to one end of the wing frame 41 with a lattice web structure; and a scroll type wing 80. The scroll type wing 80 shown in FIG. 6 is formed in a rollable scroll shape, so that the length of the scroll type wing becomes shorter when a horizontal flow velocity of the sea water is fast, while that of the wing becomes longer when the velocity is slow. Accordingly, the scroll type wing 80 allows the rotary body 30 and the submersible buoyancy body 20 to be always rotated at a regular speed. Here, the scroll type wing 80 may be mounted on a part of the wing portion. In the end, the wing portion consists of the fixed wings and the scroll type wings 80 in a mixed manner, thereby being operated in proper response to a tidal or wind speed.

As shown in FIG. 6, the scroll type wing 80 may include a blade rolling shaft 81, wing projections 84, and a blade 82. The blade rolling shaft 81 may be formed in a stick shape, and the wing projections 84 are mounted on the blade rolling shaft 81. As shown in FIG. 6, the wing projections 84 are preferably mounted on one or more position(s) of the blade rolling shaft 81. Also, the one or more wing projection(s) 84 may be mounted on the each position in a radial manner.

The blade 82 is made out of a waterproof material that is foldable and rollable as well as stands upright, an edge on one end thereof is connected to the blade rolling shaft 81, and the blade has multiple insertion holes 83 which are formed to be collinearly aligned with the wing projection 84. The wing projections 84 are radially arranged on the blade rolling shaft 81 and inserted into the insertion holes 83, and formed in a right-angled shape. Accordingly, the scroll type wing 80 is rolled properly. Such a scroll type wing 80 is attachable to/detachable from the wing portion, thereby being easily mounted and repaired. And when the blade rolling shaft 81 is rotated in one direction, the wing projection 84 is inserted into the insertion hole 83 and the blade 82 is rolled onto the blade rolling shaft 81, so that the blade 82 becomes shorter, while when the blade rolling shaft 81 is rotated in the opposite direction, the blade rolled on the blade rolling shaft 81 is released, so that the blade 82 becomes longer. Accordingly, when becoming shorter, the blade 82 covers a less portion of the wing frame 41, so that the wing portion is rotated slowly, while when becoming longer, the blade 82 covers a more portion of the wing frame 41, the wing portion is rotated fast. And it is preferable that the blade 82 is automatically rolled and released according to the rotational speed of the wing portion.

Besides, the wing frame 41 shown in FIG. 3 to 5 may be formed in a variety of shapes, as shown in FIG. 7. And a cover (not shown) may be horizontally provided to upper and/or lower portions of the wing portions 40 and 70 in order to prevent a liquid or a gas flowing horizontally from being pushed upwards and downwards and escaping from the wing portions while the liquid or the gas rotates the wing portions 40 and 70. Specifically, in order to enhance a buoyancy function of the center of the cover, the cover is preferably formed in a shape including a buoyancy space formed in a conical shape in which the center expands.

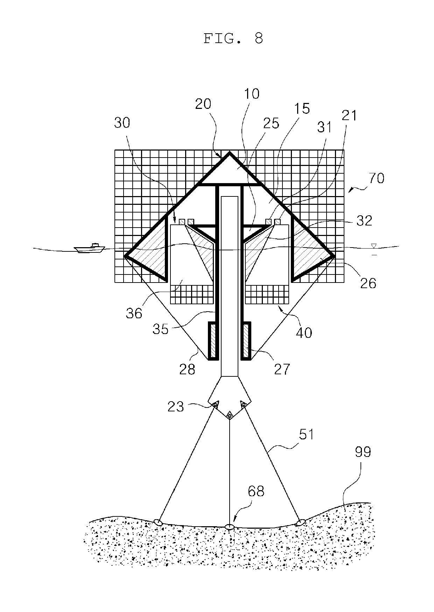

FIG. 8 illustrates a power generation apparatus including a buoyancy body according to a third embodiment of the present invention. Referring to FIG. 8, the power generation apparatus according to the third embodiment of the present invention may have the second wing portion 70 mounted on an outer surface of the submersible buoyancy body 20. Here, the first wing portion 40 is rotated by a tidal current below the sea level, and the second wing portion 70 is rotated by wind power above the sea level, wherein the two wing portions are rotated in the opposite direction to each other.

Besides, a support 25 is additionally provided to a buoyancy body extension shaft 35 vertically provided inside the center of the submersible buoyancy body 20, and a rotor 31 is provided to an edge of the support 25. The support 25 is formed in such a manner that an upper surface horizontally protrudes from a buoyancy body extension shaft 35 and a lower surface becomes narrower and inclined toward an edge of the support. And a rotary body 30 rotatably connected to the inside of the submersible buoyancy body 20 is formed in a shape in which an upper surface corresponds to a lower surface of the above-mentioned support 25, and therefore being connected to the support in a spaced manner in a state in which the upper surface of the rotary body 30 face the lower surface of the support. Accordingly, the upper surface of the support 25 is flush with the upper surface of the rotary body 30 each other, and a stator 21 is mounted on an upper surface of the rotary body 30 to correspond to the rotor 31 mounted on an edge of the support 25, so that electricity is generated by an interaction between the rotor 31 and the stator 21. Therefore, the stator 21 relatively heavier than the rotor is rotated by tidal power having great mass energy, while the rotor 31 relatively lighter than the stator is rotated by wind power, so that power generation efficiency is improved.

Reference numeral 68 represents a sea floor fixing portion, and the sea floor fixing portion may be configured with a suction anchor that uses a vacuum pump to suck air out of the suction anchor and dig the sea floor itself, and then is securely fixed to the sea floor. Here, a part of the sea floor fixing portion 68 may be configured with a ballast tank. In addition, it is apparent that the sea floor fixing portion may be configured in a moored manner using the above-mentioned sea floor mooring portion 50 if necessary.

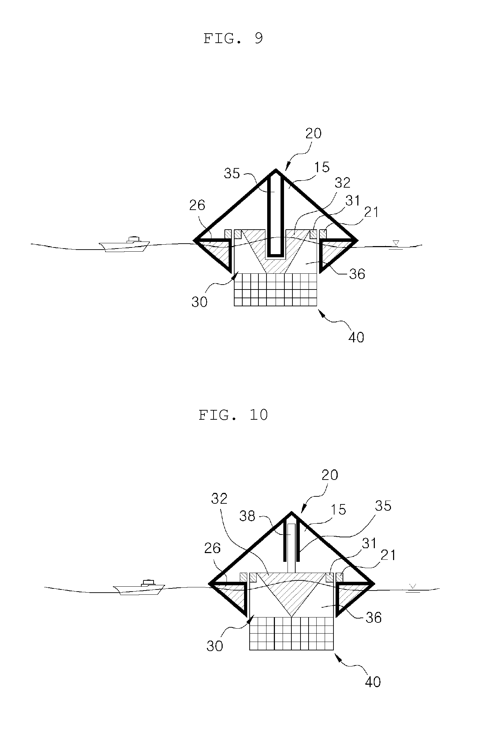

FIG. 9 illustrates a power generation apparatus including a buoyancy body according to a fourth embodiment of the present invention, and FIG. 10 illustrates a power generation apparatus including a buoyancy body according to a fifth embodiment of the present invention. Referring to FIG. 9, the power generation apparatus according to the fourth embodiment of the present invention includes a buoyancy body extension shaft 35 provided inside the center of a submersible buoyancy body 20. And a recess is formed in the center of a rotary body 30, so that the buoyancy body extension shaft 35 is rotatably inserted into the recess.

Referring to FIG. 10, the power generation apparatus according to the fifth embodiment of the present invention includes a buoyancy body extension shaft 35 provided inside the center of a submersible buoyancy body 20, and the buoyancy body extension shaft 35 is formed in a shape that is hollow inside and has the other open end. Also, a central shaft 38 is provided to the center of one end of a rotary body 30, and the central shaft 38 is inserted into the buoyancy body extension 35 shaft through an opening on the other end of the buoyancy body extension shaft, thereby being rotatably connected to the extension shaft.

In the power generation apparatus with such a configuration according to the fourth and fifth embodiments of the present invention, the first wing portion 40 is rotated by a tidal current in a state in which a part of the submersible buoyancy body 20 is exposed above the sea level and the rotary body 30 as well as the first wing portion mounted on the rotary body 30 are submerged below the sea level. Accordingly, electricity is generated by power generation means 31 and 21 provided between the submersible buoyancy body 20 and the rotary body 30.

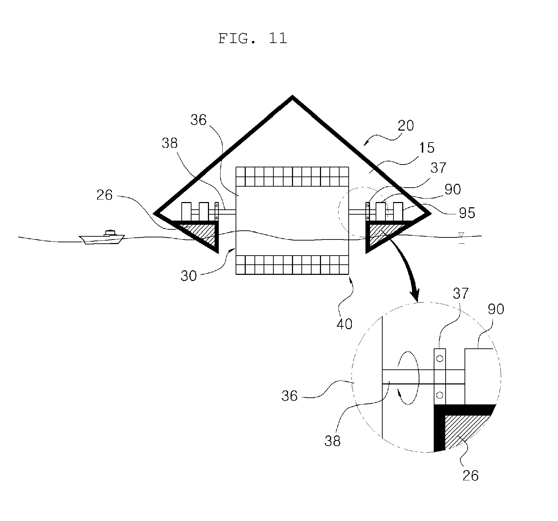

FIG. 11 illustrates a power generation apparatus including a buoyancy body according to a sixth embodiment of the present invention. Referring to FIG. 11, the power generation apparatus according to the fifth embodiment of the present invention includes a rotary body 30 horizontally provided inside a submersible buoyancy body 20 and the first wing portion 40 radially provided to the outer circumference of the rotary body 30. In addition, a central shaft 38 is provided to the center of the rotary body 30 to protrude from the left and right sides of the rotary body 30, and rotatably connected inside the submersible buoyancy body 20 in a horizontal direction.

Here, both ends of the central shaft 38 are supported by shaft stools 37 including rotation means such as bearings and rotatably connected to the submersible buoyancy body. Besides, an accelerating means 90 may be additionally provided to the central shaft 38, and a generator 95 may also provided to the one end or both ends of the central shaft 38. In this case, it is apparent that the submersible buoyancy body 20 is watertightly sealed from the boundaries between the shaft stools 37 and the submersible buoyancy body to the inside of the buoyancy body.

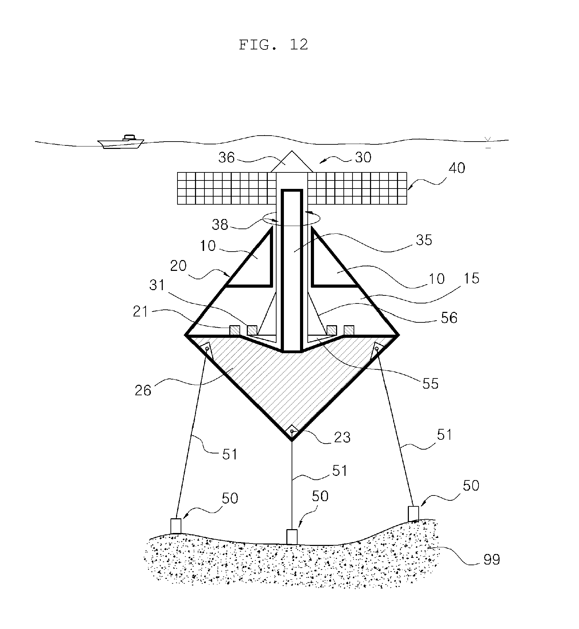

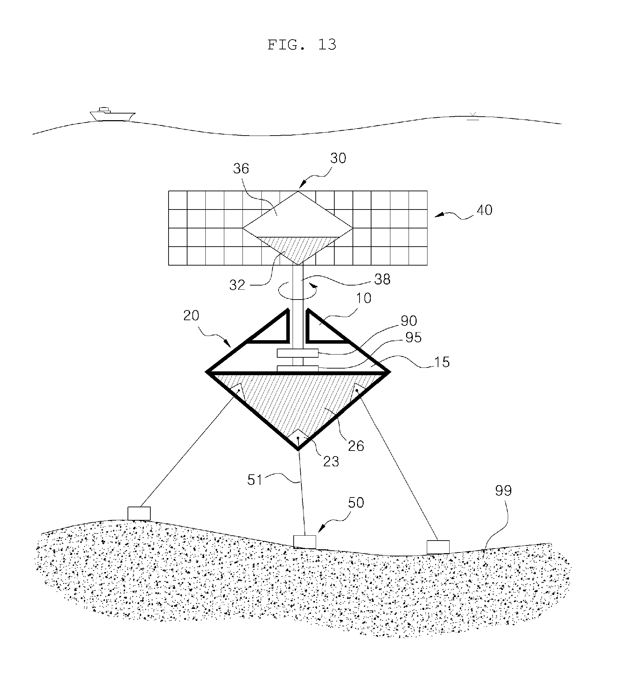

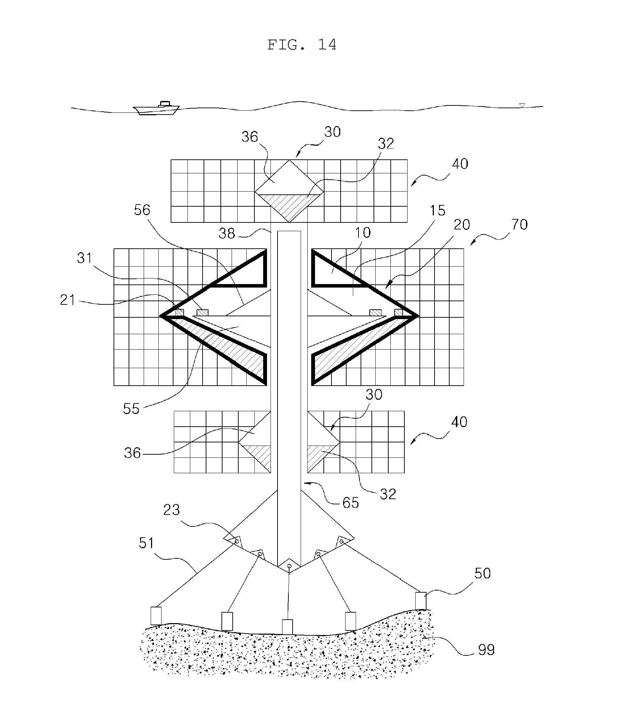

FIG. 12 illustrates a power generation apparatus including a buoyancy body according to a seventh embodiment of the present invention, FIG. 13 illustrates another configuration of the power generation apparatus including a buoyancy body according to the seventh embodiment of the present invention, and FIG. 14 illustrates a further configuration of the power generation apparatus including a buoyancy body according to the seventh embodiment of the present invention. Referring to FIG. 12, the power generation apparatus according to the seventh embodiment of the present invention is configured in such a manner that an opening on the other end of a submersible buoyancy body 20 faces upwards, the first ballast tank 26 is provided inside a lower portion of the submersible buoyancy body 20, and a buoyancy body extension shaft 35 is vertically mounted on the top of the first ballast tank 26 provided in the submersible buoyancy body 20. According to the preferred embodiment of the present invention, the first ballast tank 26 is formed in such a manner that the center thereof is inwardly dented in a determined depth and a slope of the dented portion is upwardly inclined toward an edge, and therefore the other end of a rotary body 30 to be described below is spaced from and connected to the first ballast tank in a determined distance.

The rotary body 30 includes a hollow central shaft 38 into which the above-mentioned buoyancy body extension shaft 35 is inserted, so that the central shaft 38 is inserted into the rotary body through the opening on the other end of the submersible buoyancy body 20 and rotatably connected to the submersible buoyancy body, and also the buoyancy body extension shaft 35 is inserted into and rotatably connected to the hollow space of the central shaft 35. Besides, a rotor support 55 is provided to the other end of the rotary body 30, and the rotor support 55 is spaced from the dented portion formed in the central upper portion of the above-mentioned first ballast tank 26 in a determined distance and rotatably connected thereto.

And a rotor 31 is mounted on an edge of the rotor support 55, and a stator 21 is mounted on the top of the above-mentioned first ballast tank 26 in such a manner that the stator faces the outer circumference of the rotor 31.

Besides, an end of the opening of the submersible buoyancy body 20 is rotatably connected to the central shaft 38, and the end and the shaft are watertightly sealed using a sealing means.

According to the configuration, when the rotary body 30 is rotated, the rotor 31 is rotated in combination with the rotary body 30, thereby generating electricity through an interaction with the stator 21.

In another power generation apparatus according to the seventh embodiment of the present invention, it is possible to fill a lower portion of the submersible buoyancy body with water and then float the rotary body 30 consisting of the buoyancy bodies 32 and 36 over the water surface rather than to provide the first ballast tank 26 to the lower portion of the submersible buoyancy body 20 as described above. Here, the rotor 31 is provided to an edge of the rotary body 30.

Reference numeral 56 represents a rotor support wire which is used to securely fix the rotor support 55 and the rotor 31. Referring to FIG. 13, another configuration according to the seventh embodiment of the present invention is identical to the above-mentioned configuration according to the seventh embodiment of the present invention except that the power generation means mounted on the top of the first ballast tank 26 may be provided to the lower portion of the central shaft 38. Here, the power generation means may include a generator 95 and an accelerating means 90.

Referring to FIG. 14, a further configuration according to the seventh embodiment of the present invention is made in such a manner that the second wing portion 70 is mounted on the outer circumference of a submersible buoyancy body 20 and two first wing portions 40 are provided to upper and lower portions of the rotary body 30, respectively. Here, the first wing portions 40 are fixed to both ends of a hollow central shaft 38, and the submersible buoyancy body 20 including the second wing portion 70 is rotatably connected to the central shaft 38. That is, the submersible buoyancy body 20 is formed in a shape in which the center thereof is penetrated, thereby allowing the central shaft 38 to be inserted thereinto and rotatably connected thereto. In addition, a sea floor mooring shaft 65 is inserted into an opening on the other end of the central shaft 38 formed in a shape that has a hollow cylinder and the other open end, and rotatably connected to the central shaft. The first wing portions 40 and the second wing portion 70 are rotated in the opposite direction to each other. A rotor support 55 and a rotor 31 are provided to the central shaft 38, and a stator 21 is mounted on an inner edge of the submersible buoyancy body 20, that is, in a position corresponding to the rotor 31, so that electricity is generated by an interaction between the rotor 31 and the stator 21.

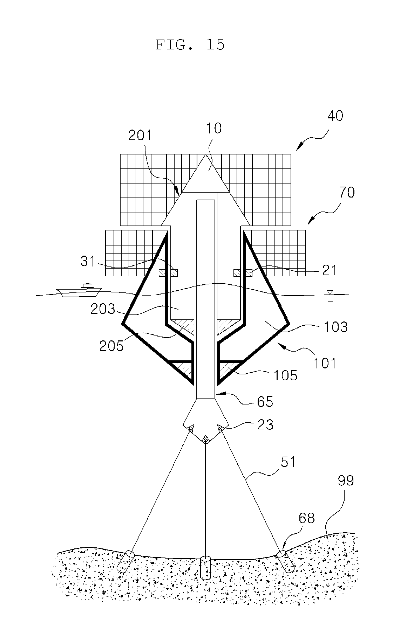

FIG. 15 illustrates a power generation apparatus including a buoyancy body according to an eighth embodiment of the present invention. Referring to FIG. 15, the power generation apparatus according to the eighth embodiment of the present invention includes a first buoyancy body 101, a second buoyancy body 201 that is inserted into an upper portion of the first buoyancy body 101 to be rotatably connected to the first buoyancy body, a sea floor mooring shaft 65 that penetrates the center of the first buoyancy body 101 and is inserted into the second buoyancy body 201, and a power generation means that is provided between the first buoyancy body 101 and the second buoyancy body 201 to generate electricity.

The first buoyancy body 101 is formed in a shape in which the center expands and both ends become narrower than the center, and has a through hole into which the sea floor mooring shaft 65 is inserted formed in the center thereof and a receiving portion to which the second buoyancy body 201 is connected formed on the other end thereof. The receiving portion of the first buoyancy body 101 may be formed in a cylindrical shape, and a lower portion of the receiving portion becomes narrower toward the center to form a slope. Also, the second wing portion 70 may be radially mounted on the outer circumference of one end of the first buoyancy body 101 (the upper portion of the body shown in FIG. 15). Furthermore, a ballast tank of the first buoyancy body 105 may be provided to the other end of the first buoyancy body 101 and a buoyancy space of the first buoyancy body 103 may be provided inside the first buoyancy body 101.

The second buoyancy body 201 is formed in a conical or polygonal shape in which the width of the body becomes narrower toward one end thereof, and the other end of the second buoyancy body is vertically extended in a shape corresponding to the above-mentioned receiving portion of the first buoyancy body 101. A connection hole through which the above-mentioned sea floor mooring shaft 65 is inserted may be formed on the center of the second buoyancy body 201. Also, the first wing portion 40 may be radially formed on the outer circumference of one end of the second buoyancy body 201 (the upper portion of the body shown in FIG. 15). Furthermore, a ballast tank of the second buoyancy body 205 may be provided to the other end of the second buoyancy body 201 and a buoyancy space of the second buoyancy body 203 may be provided inside the second buoyancy body 201.

Besides, the power generation means for generating electricity is provided between the first buoyancy body 101 and the second buoyancy body 201. The power generation means includes a rotor 31 and a stator 21. Here, the stator 21 may be mounted on an inner surface of the receiving portion of the first buoyancy body 101, and the rotor 31 may be mounted on an inner surface of the second buoyancy body 201 to correspond to the stator 21.

According to the eighth embodiment of the present invention, the power generation apparatus with such a configuration may generate electricity using wind power in a state in which the first and second wing portions 40 and 70 are exposed above the water surface of a lake or the sea. Here, either of the first and second wing portions 40 and 70 may be provided if necessary.

In another embodiment of the power generation apparatus according to the eighth embodiment of the present invention, a central shaft of the second buoyancy body, which is formed in a cylindrical shape that is hollow inside and has the other open end, may be vertically provided to the center of the second buoyancy body 201. Here, the central shaft of the second buoyancy body penetrates the center of the first buoyancy body 101 and is rotatably connected to the first buoyancy body 101, and also the sea floor mooring shaft 65 is inserted through an opening on the other end of the central shaft of the second buoyancy body and rotatably connected to the central shaft of the second buoyancy body. Alternatively, the above-mentioned sea floor fixing shaft may be inserted into and rotatably connected to the central shaft of the second buoyancy body through the opening, so that the power generation apparatus may be used as a moored power generation apparatus.

In a further embodiment of the power generation apparatus according to the eighth embodiment of the present invention, the second wing portion 70 and the sea floor mooring shaft 65 are excluded from the above-mentioned configuration, and the second buoyancy body 201 is directly and rotatably connected to the first buoyancy body 101, and therefore the power generation apparatus may generate electricity by floating on the water surface or being moored by a ship.

Here, the first buoyancy body 101 is replaced with a fixed body (not shown), that is, a structure that is supported by a plurality of posts fixed onto the sea floor 99 or the bottom of a lake or an artificial tank and includes a receiving portion for receiving the second buoyancy body 201 on the other end of the structure, and therefore the power generation apparatus may be used as a "fixed power generation apparatus".

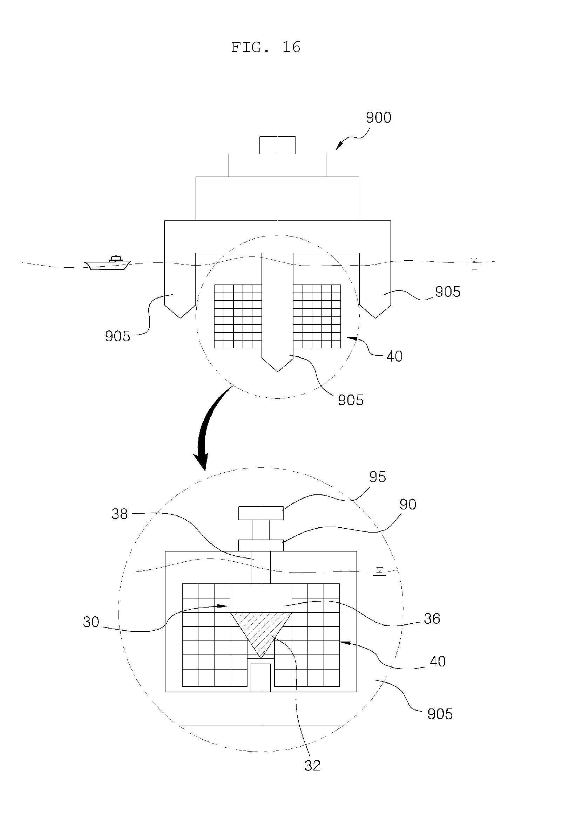

FIG. 16 illustrates a power generation apparatus including a buoyancy body according to a ninth embodiment of the present invention. FIG. 16 illustrates an example in which the power generation apparatus including a buoyancy body according to the ninth embodiment of the present invention is mounted on the middle hull of a trimaran in a rear view and in an enlarged view, and a rotary body 30 with a wing portion 40 is provided to an empty space formed in the middle hull 905 of the trimaran 900 to generate electricity. The power generation apparatus may include the rotary body 30 and a power generation means.

The rotary body 30 may consist of buoyancy bodies 32 and 36, and an end of the rotary body is rotatably connected to the trimaran 900 and the wing portion 40 is mounted on the other side of the rotary body.

As a power generation means, a generator 95 may be provided between the trimaran 900 and the rotary body 30. Here, it is apparent that an accelerating means 90 may be additionally provided. Alternatively, a central shaft 38 is provided to the center of the rotary body 30 in a longitudinal direction, and the generator 95 is connected to the other end of the central shaft 38 to generate electricity.

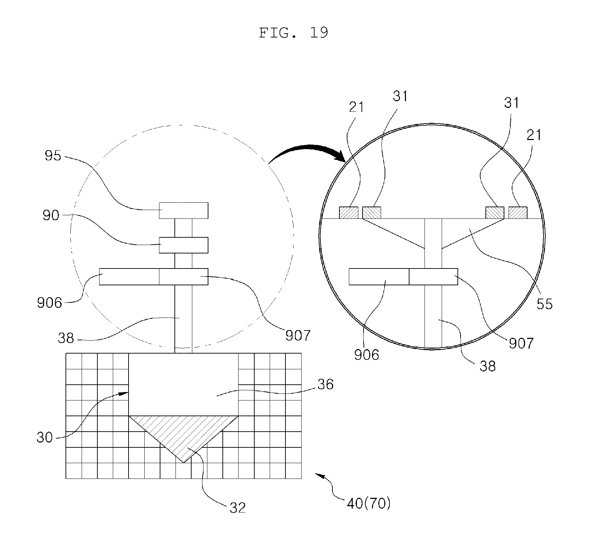

According to another embodiment, as shown in a bold line circle of FIG. 19, a rotor support 55 is mounted on the other end of the central 38, and a rotor 31 is mounted on an edge of the rotor support 55 and also a stator 21 is mounted on one end of the hull, that is, in a position corresponding to the rotor 31, and therefore electricity is generated by an interaction between the rotor 31 and the stator 21.

In such a configuration, the power generation apparatus according to the ninth embodiment of the present invention may be provided to one end (lower portion) of a multihull or a float, especially a mega float, thereby generating electricity using a water flow occurring when a ship moves.

Besides, a relationship between a power generation apparatus and a propelling apparatus is similar to that between the head and tail of a coin. That is, rotating a rotary body 30 using a liquid flow so as to generate electricity may be used for a power generation apparatus, while applying a rotational force to the rotary body 30 so as to propel a ship may be used for a propelling apparatus.

Accordingly, the operation principle shown in FIG. 5 is required to be applied in reverse so that a wing portion operated by the operation principle shown in FIG. 5 is used for a ship propelling apparatus. That is, pivotably-connected wings have to be configured to push a liquid to the rear.

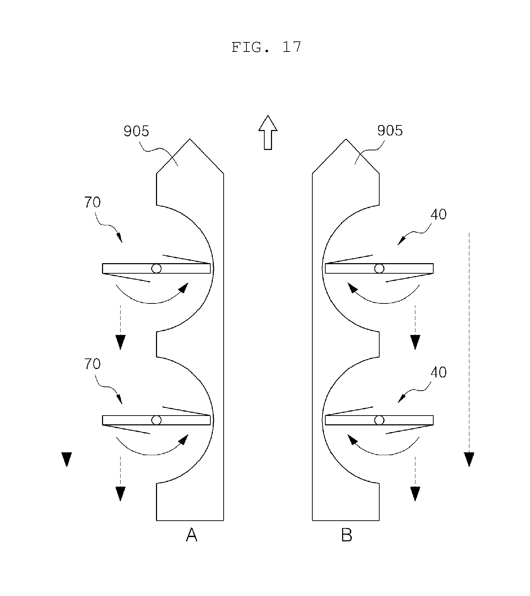

FIG. 17 illustrates a case in which a ship propelling apparatus, which include wing portions operated on the basis of the operation principle shown in FIG. 5, is applied to a propelling apparatus for a catamaran in a schematic view. For convenience of description, the deck of a catamaran 901 is omitted and two A and B hulls 905 are illustrated in FIG. 17. Referring to FIG. 17, in order to efficiently propel a ship, the ship propelling apparatus according to the present invention may be formed in pairs, wherein the each ship propelling apparatus consists of a propelling portion including the first wing portion 40 mounted on the B hull 905 and another propelling portion including the second wing portion 70 mounted on the A hull 905. In this case, in order to propel the ship 900 more efficiently, the ship propelling apparatus may be configured in such a manner that the one or more propelling portions including the first wing portions 40 are mounted on the right B hull 905 and another one or more propelling portions including the second wing portions 70 are mounted on the left A hull 905. Here, it is preferable that the propelling portion including the first wing portion 40 and the another propelling portion including the second wing portion 70 is required to be equal in number to make a pair with each other. Also, in case of a multihull including multiple hulls, it is preferable that the ship propelling apparatus according to the present invention is configured in such a manner that a propelling portion including the first wing portion 40 and another propelling portion including the second wing portion 70 are provided in the same number in order to be mounted on an even number of hulls in one or more pairs.

In addition, it is preferable that part of wing portions used to push water to the rear (the right sides of the first wing portions 40 and the left sides of the second wing portions 70) are exposed out of the hull, while the rest part of the wing portions are hidden inside the A and B hulls so that the wings avoid the resistance of water flowing in the opposite direction to the moving direction of a ship while coming back to the original position. Accordingly, when a rotational force is applied to a rotary body 30 from the outside and rotates the propelling portion including a pair of the wing portions 40 and 70 simultaneously, the wing portions 40 and 70 push water to the rear, so that a ship is propelled forward.

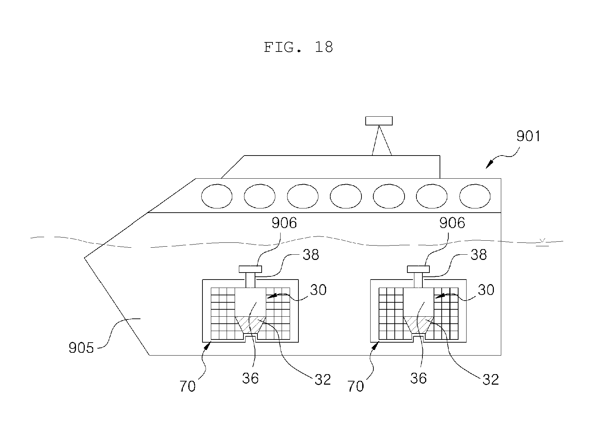

FIG. 18 illustrates a configuration of a catamaran that has the ship propelling apparatus including a buoyancy body according to the present invention in a schematic side view, and FIG. 19 illustrates a configuration of a case in which an additional power generation apparatus is provided to the ship propelling apparatus including a buoyancy body according to the present invention in a schematic view. Referring to FIG. 18, the ship propelling apparatus according to the present invention is provided to a lower portion of a hull 905 of a catamaran 901, that is, provided in the water to propel a ship. The ship propelling apparatus according to the present invention may include a rotary body 30 and a rotational force generator 906.

The rotational force generator 906 is provided to one side of the hull 905 of the ship 901, and generates a rotational force using a motor or an engine.

The rotary body 30 is connected to the rotational force generator 906, and a rotational force generated in the rotational force generator 906 is transmitted to the rotary body 30 and then rotates the wing portion 70, so that a force for propelling a ship may be obtained.

Alternatively, as shown in FIG. 19, there may be additionally provided a rotational force transmitter 907 for transmitting a rotational force generated in the rotational force generator 906 to the rotary body 30.

The rotary body 30 may include buoyancy bodies 32 and 36. In addition, a central shaft 38 is provided to the center of the rotary body 30 in a longitudinal direction, and the rotational force generator 906 is connected to the other end of the central shaft 38.

Referring to FIG. 19, a rotational force generator 906 for generating a rotational force using a motor or an engine is provided to a ship, and a rotational force generated in the rotational force generator 906 is transmitted to the rotary body 30 through a rotational force transmitter 907 and then rotates wing portions 40 and 70, so that a force for propelling a ship may be obtained as well as electricity may be generated by rotating a generator 95 mounted on the other end of the rotary body 38. Here, it is apparent that an accelerating means 90 may be additionally provided. Alternatively, as shown in a bold line circle of FIG. 19, electricity may be generated by an interaction between a rotor 31 and a stator 21.

In addition, it is preferable that the ship propelling apparatus additionally including the power generation apparatus according to the present invention generates electricity using sea currents even in a state in which a ship stops, that is, the rotational force generator 906 is not operated.

The above-mentioned rotary body 30 may include the wing portions 40 and 70 that are required to convert a rotational force generated in the rotational force generator 906 into propulsion for propelling a ship. In a first exemplary configuration, the wing portions 40 and 70 may be configured in such a manner that multiple flat panel wings made out of a material, such as metal, plastic, or etc. are radially connected to the outer circumference of the rotary body 30 and completely block the vertical planes of the wing portions.

Alternatively, in a second exemplary configuration, in order to reduce weight of the wing portions, the wing portions 40 and 70 may be configured in such a manner that the wing portions include multiple wing frames 41 with a multistage, lattice web structure and foldable and rollable wings which are made out of a waterproof material, such as a light and soft fabric, and adhere and are fixed to surfaces of the wing frames 41 to completely block multiple lattice holes formed on the wing frames 41 (refer to FIG. 3). Accordingly, the wing portions 40 and 70 with such a configuration may be more lightweight and advantageously enlarged in comparison with another wing portions with flat panel wings.

The wing portions according to the above-mentioned first and second exemplary configurations completely blocks the vertical planes of the wing frame, and therefore a ship propelling apparatus with the wing portions allows a ship to be free to move forward and backward, however a ship fails to move backward in a further configuration in which flat panel wings are pivotably connected to one side of the wing frame using a hinge or an edge on one end of the foldable and rollable wing according to the present invention is pivotably connected to one end of the wing frame with a lattice web structure. Accordingly, pivotably-connected wings are also provided to the reverse of the wing frame so that a ship moves backward. And a case in which a scroll type wing 80 according to the present invention is applied is the same as this.

In a further embodiment of the ship propelling apparatus according to the present invention, two hulls are added to the left and right sides of an existing ship, especially a monohull, and then a ship propelling apparatus and a power generation apparatus according to the present invention are additionally provided to the two added hulls, and therefore the existing ship may be improved.

It is apparent that although embodiments are disclosed through the detailed description of the present invention, a variety of modifications are made within the scope of the present invention. Accordingly, the scope of the present invention is not limited to the above-mentioned embodiments, but is defined by the claims to be described below and their equivalents.

## Claims

1. Power generation apparatus with a buoyancy body, comprising:
a submersible buoyancy body which has one closed end as well as the other open end, and has a buoyancy space inside;
a rotary body which is rotatably connected inside the submersible buoyancy body and has the first wing portion mounted on the other end thereof; and
a power generation means which is disposed between the submersible buoyancy body and the rotary body to generate electricity.

2. Power generation apparatus with a buoyancy body according to claim 1, **characterized in that** an opening is additionally provided to the one closed end of the submersible buoyancy body.

3. Power generation apparatus with a buoyancy body according to claim 1 or 2, **characterized in that** an end of the opening of the submersible buoyancy body and the rotary body are rotatably connected to each other and sealed by a sealing means in a waterproof manner.

4. Power generation apparatus with a buoyancy body according to claim 1, **characterized in that** one or more completely-sealed second buoyancy space(s) are further provided to the buoyancy space.

5. Power generation apparatus with a buoyancy body according to claim 1, **characterized in that** the power generation apparatus has a ballast tank.

6. Power generation apparatus with a buoyancy body according to claim 1, **characterized in that** a buoyancy body extension shaft is provided in the center of the submersible buoyancy body in a longitudinal direction, and the rotary body is rotatably connected to the buoyancy body extension shaft.

7. Power generation apparatus with a buoyancy body according to claim 1, **characterized in that** the second wing portion is provided to the outer circumference on the one end of the submersible buoyancy body, and a sea floor mooring shaft or a sea floor fixing shaft is provided as a support shaft so that the submersible buoyancy body having the second wing portion and the rotary body having the first wing portion are rotated in the opposite direction to each other.

8. Power generation apparatus with a buoyancy body, comprising:
a ship floating on the water surface;
a rotary body which has one end rotatably connected to the ship and the other end provided with a wing portion; and
a power generation means which is disposed between the ship and the rotary body to generate electricity.

9. Ship propelling apparatus with a buoyancy body, comprising:
a ship floating on the water surface;
a rotary body which has one end rotatably connected to the ship and the other end provided with a wing portion; and
a rotational force generator which is provided to one end of the ship and rotates the rotary body.

10. Ship propelling apparatus with a buoyancy body, comprising:
a ship floating on the water surface;
a rotary body which has one end rotatably connected to the ship and the other end provided with a wing portion;
a rotational force generator which is provided to one end of the ship;
a rotational force transmitter which is connected to transmit a rotational force from the rotational force generator to the rotary body; and
a power generation means which is disposed between the ship and the rotary body to generate electricity.

11. Ship propelling apparatus with a buoyancy body according to claim 9 or 10, **characterized in that** each pair of the ship propelling apparatus in the same numbers are mounted on an even number of hulls in one or more pairs, and part of the apparatus which is used to push water to the rear is exposed out of the hull, while the rest part of the apparatus is hidden in the hull so that the resistance of water flowing in the opposite direction to the moving direction of the ship is avoided.

12. Power generation apparatus and ship propelling apparatus with a buoyancy body according to any one of claim 1, 8, 9, or 10, **characterized in that** the rotary body may have a buoyancy body.

13. Power generation apparatus and ship propelling apparatus with a buoyancy body according to any one of claim 1, 8, or 10, **characterized in that** the power generation means has a generator.

14. Power generation apparatus and ship propelling apparatus with a buoyancy body according to any one of claim 1, 8, 9, or 10, **characterized in that** a central shaft is provided to the center of the rotary body in a longitudinal direction.

15. Power generation apparatus with a buoyancy body, comprising:
a first buoyancy body which has a receiving portion for receiving a second buoyancy body formed on one end thereof;
a second buoyancy body of which the other end is formed in a shape corresponding to the receiving portion and inserted into the receiving portion of the first buoyancy body to be rotatably connected to the first buoyancy body;
a wing portion which is radially provided to the outer circumference of the second buoyancy body; and
a power generation means which is disposed between the first buoyancy body and the second buoyancy body to generate electricity.

16. Power generation apparatus with a buoyancy body, comprising:
a fixed body which is supported by a plurality of posts fixed onto the sea floor, or the bottom of a lake or an artificial tank, and has a receiving portion for receiving a second buoyancy body formed on one end thereof;
a second buoyancy body of which the other end is formed in a shape corresponding to the receiving portion and inserted into the receiving portion of the fixed body to be rotatably connected to the fixed body;
a wing portion which is radially provided to the outer circumference of the second buoyancy body; and
a power generation means which is disposed between the fixed body and the second buoyancy body to generate electricity.

17. Power generation apparatus and ship propelling apparatus with a buoyancy body according to any one of claim 1, 8, 10, 15, or 16, **characterized in that** the power generation means consists of a rotor and a stator, wherein the rotor is provided to a position corresponding to the stator.

18. Power generation apparatus with a buoyancy body according to claim 1 or 15, **characterized in that** a mooring means for mooring the power generation apparatus below the water surface is provided.

19. Ship propelling apparatus according to claim 9 or 10, **characterized in that** the wing portion mounted on the other end of the rotary body is configured in such a manner that multiple flat panel wings are provided to the outer circumference of the rotary body and completely block a vertical plane of the wing portion.

20. Ship propelling apparatus according to claim 9 or 10, **characterized in that** the wing portion mounted on the other end of the rotary body comprise multiple wing frames with a multistage, lattice web structure, and foldable and rollable wings which are made out of a waterproof material, such as a light and soft fabric and adhere and fixed to the wing frames to completely block multiple lattice holes formed on the wing frames.

21. Wing portions comprising multiple wing frames with a multistage, lattice web structure, and multiple wings of which each edge is connected to one end of the each wing frame, **characterized in that** the multiple wings adhere to surfaces of the wing frames and transmit a flow pressure of a liquid or a gas to the wing frames so as to allow the wing frames to be rotated when the wings connected to the wing frames are positioned in a direction facing a horizontal flow of the liquid or the gas, whereas the wings are spaced from the surfaces of the wing frames and prevent a flow pressure of a liquid or a gas from being transmitted to the wing frames when the wings connected to the wing frames are positioned along a direction of a horizontal flow of the liquid or the gas.

22. Foldable and rollable wing according to claim 21, **characterized in that** the wing is made out of a waterproof material that is foldable and rollable as well as stands upright, one edge thereof is pivotably connected to one end of the wing frame, and an upright state reinforcement means is further provided to the other end of the wing.

23. Foldable and rollable wing according to claim 21, **characterized in that** some or all of the multiple wings are formed in a rollable scroll shape, so that the length of the scroll type wing becomes shorter when a horizontal flow velocity of a liquid or a gas is fast, while that of the wing becomes longer when the velocity is slow, and therefore the wing portion is always rotated at a regular speed.

24. Foldable and rollable wing according to claim 23, **characterized in that** the scroll type wing comprises a blade rolling shaft, wing projections radially provided to the blade rolling shaft, and a blade of which an edge on one end is connected to the blade rolling shaft and which has multiple insertion holes formed to be collinearly aligned with the wing projections.
